# EUROPÄISCHE PATENTSCHRIFT

(11) **EP 3 479 462 B1**
(45) Veröffentlichungstag und Bekanntmachung des Hinweises auf die Patenterteilung: **30.12.2020**
(21) Anmeldenummer: 17739456.6
(22) Anmeldetag: 04.07.2017
(51) Int. Cl.: H02K 7/116, H02K 16/00, H02K 16/02

(54) **ELEKTRISCHES MASCHINENSYSTEM**
ELECTRICAL MACHINE SYSTEM
SYSTÈME DE MACHINE ÉLECTRIQUE

(30) Priorität: 04.07.2016 AT 505942016
(43) Veröffentlichungstag der Anmeldung: 08.05.2019
(73) Patentinhaber: Technische Universität Wien, 1040 Wien (AT)
(72) Erfinder: SCHRÖDL, Manfred, 7223 Sieggraben (AT)
(74) Vertreter: Sonn & Partner Patentanwälte
(86) Internationale Anmeldenummer: PCT/AT2017/060164
(87) Internationale Veröffentlichungsnummer: WO 2018/006109

(56) Entgegenhaltungen:
- WO-A2-2012/164052
- DE-A1-102012 222 949
- DE-A1-102013 213 847
- JP-A- 2007 057 066
- JP-U- S54 101 310
- US-A- 2 782 328

## Beschreibung

Die Erfindung betrifft ein elektrisches Maschinensystem mit einer geradzahligen Anzahl von mechanisch und elektrisch verkoppelten Teilmaschinen, die gemeinsame magnetische Abschnitte und gemeinsame Spulen aufweisen und über mechanische Getriebe verbunden sind, wobei jede Teilmaschine einen Rotor aufweist, wobei benachbarte Teilmaschinen zueinander entgegengesetzte Drehrichtungen bei betragsmäßig gleichen Drehzahlen aufweisen. Ähnliche Maschinensysteme sind aus US 5,780,950A und aus DE 10 2013 213 847 A1 bekannt.

Elektrische Antriebe mit Getriebestufen werden häufig mit einer elektrischen Maschine, wie einer Permanentmagnet- oder elektrisch erregten Synchronmaschine, Asynchronmaschine, Reluktanzmaschine und dergleichen ausgeführt, an deren Ausgangswelle ein ein- oder mehrstufiges Getriebe mechanisch angeschlossen ist.

Beispielsweise ist in DE 4 334 590 A1 ein Elektromotor mit einer Hohlwelle offenbart der mit einem ein Stirnrad aufweisenden Differenzialgetriebe verbunden ist, dessen eine Abgangswelle durch die Hohlwelle des Elektromotors geführt ist. Ein Stirnradgetriebe hat aber den Nachteil, dass jeweils nur ein Zahnflankenpaar die Kräfte bzw. das Drehmoment auf die folgende Welle überträgt. Eine Aufteilung der Kräfte auf mehrere Zahnflankenpaare würde ein Planetengetriebe mit mehreren Planetenrädern ermöglichen, wobei aber für eine gleichmäßige Aufteilung der Kräfte auf die einzelnen Planeten eine präzise mechanische Fertigung erforderlich ist, sodass eine solche Lösung aufwändig ist. Außerdem weisen die Planeten in Planetengetrieben typischerweise zwei Kontaktstellen an Zahnflanken auf, an denen durch Gleitbewegungen Getriebeverluste produziert werden.

Aus WO 2004/047256 A1 ist ein Generator mit Mehrfachausgang bekannt, wobei im Inneren des Gehäuses zwei Generatoreneinheiten um eine Hauptwelle herum angebracht sind.

Weiters sind in der DE 10 2013 213 847 A1 bzw. der entsprechenden WO 2015/007441 A2 Anordnungen von mehreren elektrischen Maschinen offenbart die mit einem nachgeschalteten Getriebe verbunden sind. Dabei wird vorgeschlagen, einpoligen Rotoren jeweils mehrere, zB vier Polpaare zuzuordnen. Die Rotoren sind radial zu einander versetzt angeordnet. Von Nachteil ist hier, dass die geoffenbarten nachgeschalteten Getriebe keine entgegengesetzten Drehrichtungen benachbarter Rotoren bei betragsmäßig gleicher Drehzahl realisieren. Weiters ist von Nachteil, dass jeder Rotor einen voll ausgebildeten Stator benötigt, weil keine materialreduzierenden geometrischen Vereinfachungen im Statoraufbau vorgenommen werden können. Speziell können die geoffenbarten Topologien keine materialreduzierten vorteilhaften Drehstromtopologien, etwa aus vier zwei- oder vierpoligen Rotoren bei einer dreiphasigen Statoranordnung mit entsprechender Getriebefunktion, darstellen.

Aus EP 0721248 A2 ist eine elektrische Antriebsvorrichtung mit mehreren permanentmagnetisch erregten Rotoren bekannt, denen jeweils drei Statorpole zugeordnet sind. Diese Antriebsvorrichtung ist für Trockenrasierapparate vorgesehen, wobei die Rotoren ohne gegenseitige mechanische Verbindung rotieren, wie dies in Rasierapparaten üblich ist. Dies hat den Nachteil, dass keine vorzugsweise drehmomenterhöhende Getriebestufe vorhanden ist.

Eine andere Anordnung mit mehreren Rotoren und gemeinsamem Stator ist in DE 10 2009 010 162 A1 gezeigt. Dabei sind die mehreren Rotoren in Form einer Matrix angeordnet, wobei alle Wellen in gleiche Richtung drehen, wodurch eine komplizierte Statorgeometrie nötig ist.

Eine ähnliche Lösung ist in US 5,780,950 A angegeben, wo ebenfalls mehrere Rotoren mit einem gemeinsamen Stator wechselwirken, wobei die Statorspulenenden zu jeweils einem anderen Rotor gerichtet sind. Nachteilig ist, dass alle Rotoren zwar mit einer Getriebestufe mechanisch verbunden sind, aber in gleiche Richtung rotieren und deswegen von der Charakteristik Einphasenmaschinen mit schwankendem Drehmoment sind, die eine ungleichförmige Momenteinleitung in das verbindende Getriebe bewirken. Es kann speziell keine Dreiphasen-Drehstromanordnung erzeugt werden, die ein gleichmäßiges Moment pro Teilrotor einspeisen könnte.

Eine weitere Anordnung mit mehreren parallelen Rotoren und einen auf mehrere Rotoren wirkenden Magnetkreis ist in EP 0678966 A1 angegeben. Allerdings erfordert die Geometrie komplizierte verteilte Spulensysteme, wodurch ein deutlich komplizierter Statoraufbau nötig ist.

Weiters wird in der WO 2012/164052 A2 ein elektrisches Maschinensystem mit mehreren mechanisch miteinander verbundenen Rotoren in einem gemeinsamen Gehäuse gezeigt. Benachbarte Rotoren drehen sich dabei in entgegengesetzte Drehrichtungen.
Die US 2,782,328 zeigt ebenfalls ein elektrisches Maschinensystem mit mehreren Rotoren und Spulenwicklungen, bei dem sich benachbarte Rotoren in unterschiedliche Drehrichtungen drehen.

Schließlich ist auch in DE 2006 386 C1 eine Multi-Rotor-Anordnung dargestellt, die mit einem Drehfeld eines gemeinsamen Ständersystems zusammen wirkt. Aufgrund der matrixartigen Anordnung ist kein wirtschaftlich aufgebautes Getriebe zur Verbindung der Rotoren möglich und aufgrund der Zielanwendungen (Zentrifugen) auch nicht angestrebt.

Aufgabe der Erfindung ist es, ein elektrisches Maschinensystem wie eingangs ausgeführt zu schaffen, bei dem einerseits die oben genannten Nachteile vermieden werden und das andererseits aufgrund einer neuen Maschinenstruktur wirtschaftlicher arbeiten bzw. betrieben werden kann.

Diese Aufgabe wird durch die Erfindung gelöst, die ein elektrisches Maschinensystem gemäß den beiliegenden Ansprüchen vorsieht.

Die Erfindung sieht somit ein Maschinensystem mit einer Anordnung von mehreren elektrischen Teilmaschinen vor, die mechanisch über ein Getriebe verbunden sind. Dabei wird eine kompakte Konstruktion des aus den elektrischen Teilmaschinen bestehenden Maschinensystems ermöglicht, da aufgrund der geometrischen Anordnung gewisse Teile der Teilmaschine weggelassen werden können, weil sich magnetische Flussanteile von benachbarten Teilmaschinen stückweise kompensieren und damit magnetisch aktives Material eingespart bzw. erübrigt werden kann. Andererseits kann die mechanische Kopplung der Teilmaschinen vorteilhafterweise als mechanisches Planetengetriebe mit einem gewünschten Übersetzungsverhältnis ausgeführt werden, wodurch Komponenten des Planetengetriebes, wie Lagerung, Kupplungen und Gehäuseteile, gegenüber einem diskreten Aufbau aus elektrischer Maschine und funktionell getrenntem Planetengetriebe eingespart bzw. doppelt genutzt werden können. Außerdem weisen beim vorliegenden Maschinensystem die mit den Teilmaschinen verbundenen Planeten nur einen Kontakt auf der Zahnflanke auf, wodurch die Verluste gegenüber einem normalen Planetengetriebe deutlich reduziert werden können.

Weiters ist von Vorteil, dass die elektrischen Teilmaschinen unabhängig von der mechanischen Fertigungstoleranz die Teilmomente bzw. -kräfte, die sie entwickeln, auf ein dem Teilmotor durch direkte mechanische Verbindung zugeordnetes Planetenrad übertragen. Demgemäß entfällt das Aufsplitten eines einzelnen Wellendrehmoments der elektrischen Maschine über ein Zahnrad auf Planeten, das Drehmoment wird vielmehr direkt durch die Teilmaschinen gesplittet. Somit kann die jeweilige Leistung der Teilmaschine auf 1/n-tel (n = Anzahl der Planetenräder bzw. der Teilmaschinen) im Vergleich zur Leistung einer zugeordneten einzelnen Elektromaschine aufgeteilt werden. Neben der stark vereinfachten Konstruktion ergibt sich daraus ein weiterer bemerkenswerter Vorteil: Da erfahrungsgemäß bei Hochdrehzahlantrieben hauptsächlich die Umfangsgeschwindigkeit mit einigen 100 m/s aus Festigkeitsgründen begrenzt ist, kann bei gleicher begrenzter Umfangsgeschwindigkeit der Teilrotoren in das gleiche Volumen deutlich mehr elektrische Leistung installiert werden. Splittet man beispielsweise einen Rotor in vier Teilrotoren auf, die die gleiche Rotor-Gesamtfläche haben, so haben die Teilrotoren den halben Durchmesser des ursprünglichen Rotors. Unterstellt man den gleichen spezifischen Schub pro Fläche im Luftspalt, so bedeutet der halbe Durchmesser bzw. der halbe Umfang des ursprünglichen Rotors den halben Schub pro Teilrotor. Multipliziert mit dem halben Radius des ursprünglichen Rotors liefert jeder Teilrotor somit ein Viertel des ursprünglichen Drehmoments, in Summe liefert die Aufspaltung in flächenneutrale Teilrotoren das gleiche Drehmoment, die gleiche Leistung wird also durch die gleiche Drehzahl der Teilrotoren wie ursprünglich möglich. Die gleiche Leistung ist daher beim vorliegenden System mit der halben Umfangsgeschwindigkeit erzielbar, und somit wird ein großer Vorteil bei der mechanischen Realisierung erhalten. Es gibt also im Prinzip noch eine Reserve, um die Drehzahl und damit die installierte Leistung zu verdoppeln, um auf die gleiche Umfangsgeschwindigkeit zu kommen. Vorteilhaft ist weiters auch, dass die die mechanische Kopplung herbeiführende Getriebefunktion zur Darstellung eines Übersetzungsverhältnisses von Rotordrehzahl zu Getriebeabtriebsdrehzahl genutzt werden kann.

Ferner ist günstig, dass die Spulen des Mehrmaschinensystems zu einem Drehstrom-Wicklungssystem beliebiger Strangzahl, vorzugsweise einem dreisträngigen Drehstrom-Wicklungssystem, verschaltet sind.

Die Rotoren der Teilmaschinen können gemäß einer bevorzugen Ausführungsform synchron laufende Rotoren mit Permanentmagenterregung, elektrischer Erregung und/oder Reluktanzcharakter sein. Andererseits können die Rotoren der Teilmaschinen auch asynchron laufende Rotoren in Form eines Kurzschlussläufers und/oder Schleifringläufers sein.

Die Ansteuerung des Spulensystems kann mit Vorteil über leistungselektronische Stellglieder nach an sich bekannten Ansteuerverfahren für Drehstrommaschinen erfolgen; weiters ist es möglich, mittels Rechenmittel eine mittlere elektrische Rotorposition der Teilmaschinen über sensorlose Verfahren, auf Basis mathematischer Modelle, zu ermitteln. Als Beispiel sei AT 508 854 B erwähnt. Weiters werden mathematische Modelle in Schrödl, M. "Sensorless Control of A.C. machines", Fortschrittsbericht VDI, Reihe 21, Nr. 117 (VDI-Verlag Düsseldorf 1992) angegeben.

Die mechanische Verkopplung der Teilmaschinen kann in an sich bekannter Weise auch beispielhaft derart sein, dass die Ausführung einer resultierenden linearen Bewegung erzielt wird.

Für eine einfache Einstellung ist es auch von Vorteil, wenn die mittleren Winkellagen der in verschiedenen Richtungen rotierenden Teilmaschinen im Betrieb relativ zueinander mechanisch veränderbar sind.

Das Maschinensystem kann eine Welle aufweisen, die ein Getriebeelement bzw. mehrere Getriebeelemente trägt, wobei das Getriebeelement bzw. die Getriebeelemente die Teilmaschinen mechanisch verkoppelt bzw. verkoppeln, wobei die Welle mit einem Differenzialgetriebe mechanisch verbunden ist; vorzugsweise ist dabei, um Platz zu sparen, die Welle als Hohlwelle ausgeführt.

Die Erfindung wird nachfolgend anhand von in der Zeichnung dargestellten bevorzugten Ausführungsbeispielen noch weiter erläutert. Im einzelnen zeigen in der Zeichnung:
Fig. 1 schematisch ein Maschinensystem mit vier Teilmaschinen;
Fig. 2 eine schematische, gegenüber Fig. 1 vereinfachte Struktur eines solchen Maschinensystems mit vier Teilmaschinen;
Fig. 3 ein gegenüber Fig. 1 weiter in der Konstruktion vereinfachtes Maschinensystem in schematischer Darstellung;
Fig. 4 ein Beispiel für eine mechanische Kopplung, hier mit ausschließlich außenverzahnten Zahnrädern;
Fig. 5 ein modifiziertes Planetengetriebe, mit Drehrichtungsumkehr benachbart der zugehörigen Teilmaschine;
Fig. 6a ein Schema eines Maschinensystems mit vier Teilmaschinen, wobei die Rotoren dieser Maschinen so ausgerichtet sind, dass sie alle eine waagrechte magnetische Achse aufweisen;
Fig. 6b ein vergleichbares Schema eines Maschinensystems, bei dem sich jedoch in allen vier Teilmaschinen jeweils eine senkrechte magnetische Achse einstellt;
Fig. 7 ein weiteres Schema eines Maschinensystems mit vier Teilmaschinen, mit einer modifizierten Spulenanordnung;
Fig. 8 eine weiter modifizierte schematische Anordnung eines solchen Maschinensystems mit vier Teilmotoren, wobei nun jeweils zwei Spulen nebeneinander liegen;
Fig. 9 ein Schema entsprechend jenem vom Fig. 8, jedoch mit drei Spulensystemen anstatt zwei Spulensystemen, wie in Fig. 8 gezeigt;
Fig. 10 in Weiterentwicklung des Systems von Fig. 8 ein Schema eines beispielhaften Linearantriebs; und
Fig. 11 schematisch ein im vorliegenden Zusammenhang mit Vorteil anwendbares Differenzialgetriebe.

Im Folgenden werden eine zweisträngige und eine dreisträngige Struktur, ausgehend von je vier Teilmaschinen 1, 2, 3, 4, zu einem vorteilhaft aufgebauten zwei- bzw. dreisträngigen Planetenmotor umgeformt.

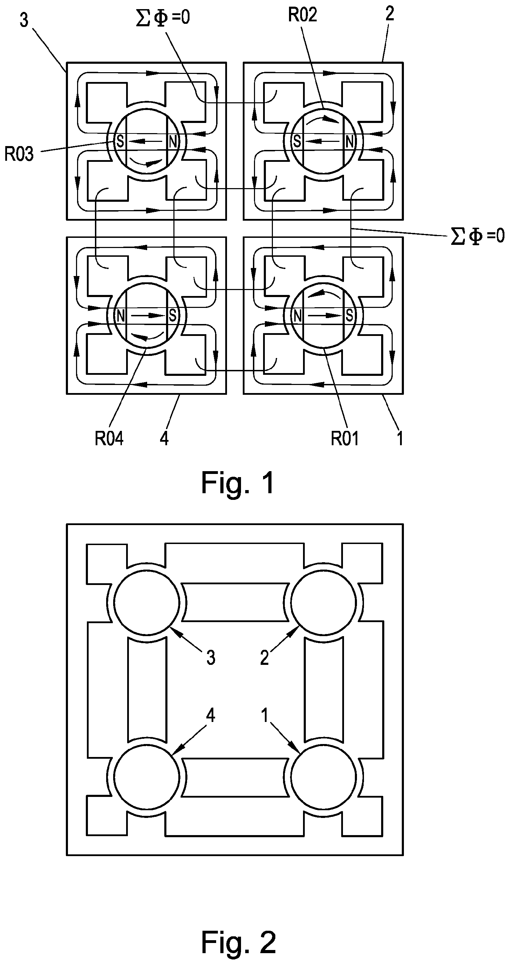

In Fig. 1 sind die vier Teilmaschinen 1, 2, 3, 4 beispielsweise mit permanentmagneterregten Rotoren RO1 bis RO4 dargestellt. Die Rotoren RO1 bis RO4 sind z.B. gemäß Fig. 1 so magnetisiert, dass sich jeweils eine waagrechte Magnetisierungsrichtung N → S einstellt, wobei die oberen Teilmotoren 1, 2 die Magnetisierungsrichtung N-S von rechts nach links und die unteren Teilmotoren 3, 4 die Magnetisierungsrichtung von links nach rechts (gemäß der Darstellung in Fig. 1) aufweisen. Die Feldbilder sind symbolisch mit Pfeilen bzw. Linien vereinfacht eingetragen.

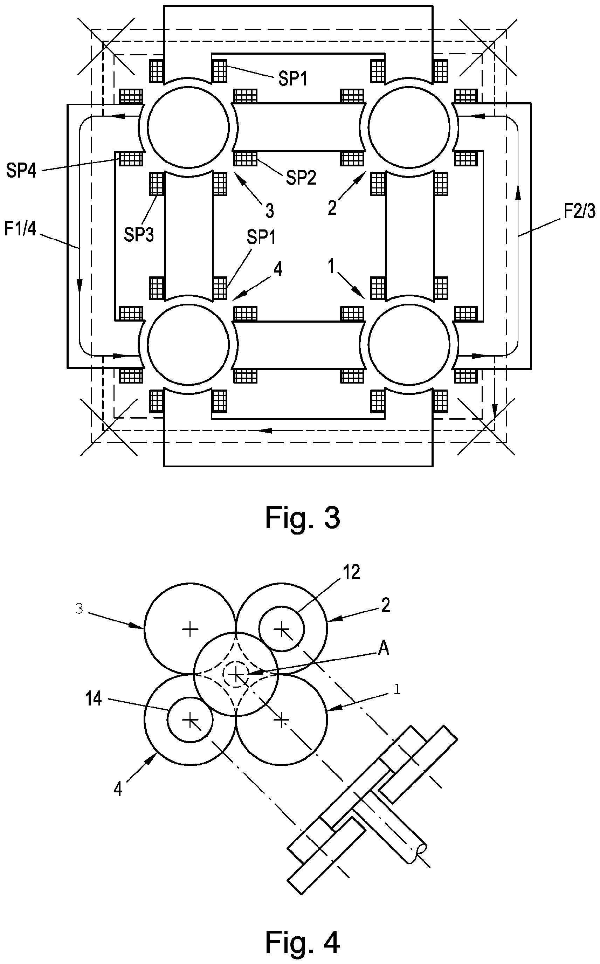

Fordert man nun, dass sich bei einer 90°-Drehung etwa des rechten unteren Rotors RO1 in mathematisch positiver Richtung die anderen Rotoren RO2, RO3, RO4 so drehen sollen, dass ein Feldbild entsteht, das gegenüber dem Ausgangsfeldbild durch Drehen des gesamten Bildes von Fig. 1 um 90° erzeugt werden kann, so gelingt dies, wenn einander diagonal gegenüberliegende Rotoren, z.B. RO1 und RO3, gleichartig rotieren und die anderen zwei Rotoren, z.B. RO2 und RO4, mit gleicher Winkelgeschwindigkeit im Gegensinn rotieren. Dies kann verallgemeinert werden, wenn eine Matrix von 2.n(n=1, 2,...) Teilmaschinen 1, 2, 3, 4 ... aufgebaut wird, deren Nachbarn stets in die Gegenrichtung mit gleicher Winkelgeschwindigkeit rotieren. Durch diese Konstruktionsvorschrift wird erreicht, dass man die Struktur vereinfachen kann: Bringt man die z.B. vier Teilmotoren 1 bis 4 nun in Kontakt, so heben sich in benachbarten Abschnitten der Teilmotoren 1 bis 4 gemäß Fig. 1 die benachbarten Flüsse auf, was in Fig. 1 mit ∑Φ=0 angedeutet ist. Damit können die entsprechenden magnetischen Teile eingespart bzw. erübrigt werden, wodurch eine Reduktion des nötigen Aktivmaterials im magnetischen Kreis erzielt wird, vgl. auch Fig. 2, die ein vereinfachtes prinzipielles Schema, ohne Darstellung von Systemen und Feldlinien, zeigt. Nun kann man noch die äußeren Rückschlussbereiche umordnen, ohne die Luftspaltfelder der vier Teilmaschinen 1 bis 4 zu verändern, wodurch sich die Anordnung gemäß Fig. 3 ergibt. Die in Fig. 3 strichlierten Bereiche und Feldlinien der "alten" Struktur (gemäß Fig. 1) werden "umgeleitet", wodurch die neuen (in Fig. 3 durchgezogenen) Wege von Feldlinien - z.B. F2/3 und F1/4 - entstehen, ohne das Feldbild im jeweiligen Luftspaltbereich zu verändern. Weiters sind in Fig. 3 die Spulensysteme der vier Teilmaschinen 1 bis 4 eingetragen (je vier Spulen SP1 bis SP4 pro Teilmaschine 1, 2, 3 bzw. 4, d.h. insgesamt also 16 Spulen). Durch die neuen Wege der Feldlinien werden die Flussverkettungen der Spulen nicht verändert. Nun kann man jeweils zwei Spulen von benachbarten Teilmaschinen, die vom gleichen Fluss durchflossen werden, zu jeweils einer Spule zusammenfassen, z.B. also die Spulen Sp1 und Sp3 der Teilmaschinen 3 und 4 in Fig. 3, ohne die Funktionalität der Anordnung zu ändern. Dadurch kann in vorteilhafter Weise das Spulensystem der vier Teilmaschinen 1 bis 4 von 16 auf insgesamt 8 Spulen reduziert und damit eine wesentlich einfachere Struktur gegenüber der Ausgangsstruktur erzielt werden.

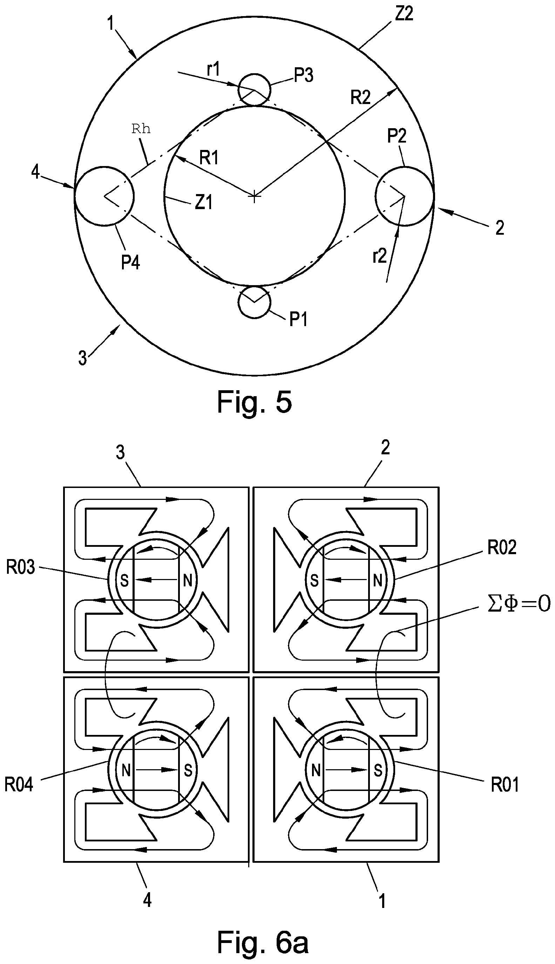

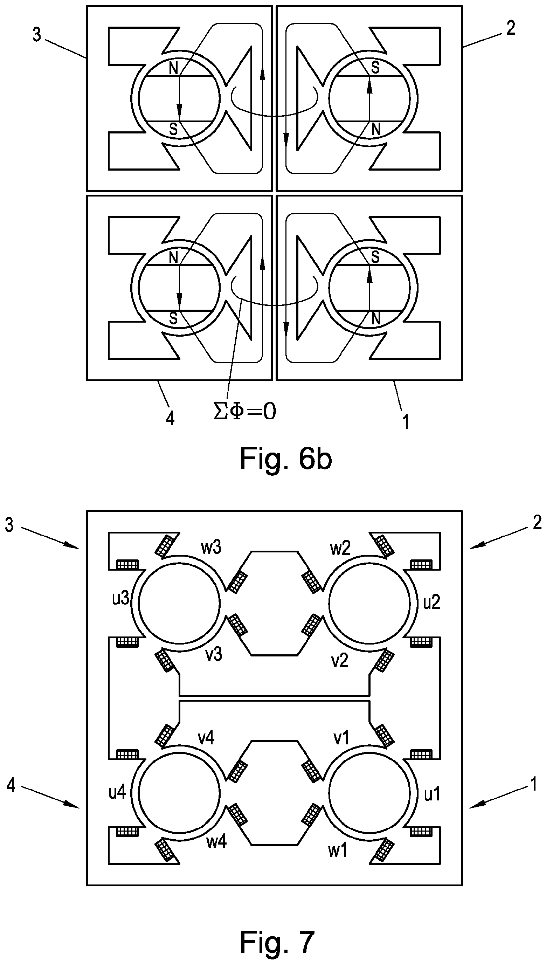

Alternativ kann anstatt der in Fig. 3 gezeigten zweisträngigen Struktur eine analoge Struktur mit einem dreisträngigen Spulensystem hergeleitet werden. Dazu wird in Abänderung der Struktur von Fig. 1 von der zweisträngigen Struktur auf eine dreisträngige Ausgangsstruktur, bestehend wiederum aus vier Teilmaschinen 1 bis 4, gewechselt, vgl. Fig. 6a und 6b; jede der Teilmaschinen 1 bis 4 gemäß Fig. 6 trägt drei Spulen, in Summe trägt die Ausgangsstruktur gemäß Fig. 6 daher 12 Spulen. Es wird zur besseren Illustration wieder von permanentmagneterregten zweipoligen Rotoren ausgegangen. Es sind aber auch andere Rotoren, etwa mit reinem Reluktanzcharakter, mit elektrischer Erregung etc., denkbar.

In Fig. 6a sind die Rotoren RO1 bis RO4 der Teilmaschinen 1 bis 4 so ausgerichtet, dass sie alle eine waagrechte magnetische Achse N → S aufweisen. Es stellt sich ein schematisches Feldbild gemäß Fig. 6a ein, wobei durch die spezielle Anordnung der vier Teilmaschinen 1 bis 4 einige Teilbereiche aufgrund gegenseitiger Kompensation wieder keinen Fluss führen (in Fig. 6a beispielhaft für die Rotoren RO1 und RO2 mit ∑Φ=0 angedeutet). Diese Teile werden in weiterer Folge weggelassen.

In Fig. 6b stellt sich in allen vier Teilmaschinen 1 bis 4 jeweils eine senkrechte magnetische Achse N-S ein. Dies wird hier dadurch erreicht, dass jeweils benachbarte Maschinen, z.B. 1/2, 2/3, 3/4 bzw. 4/1, mit entgegengesetzter Drehrichtung, aber betragsmäßig gleicher Drehzahl um +90° bzw. -90° verdreht werden.

In dieser Magnetfeldkonfiguration ergeben sich ebenfalls wieder Maschinenteile, in denen sich der Fluss in benachbarten Bereichen aufhebt (∑Φ=0) und die entsprechenden elektromagnetischen Teile somit weggelassen werden können.

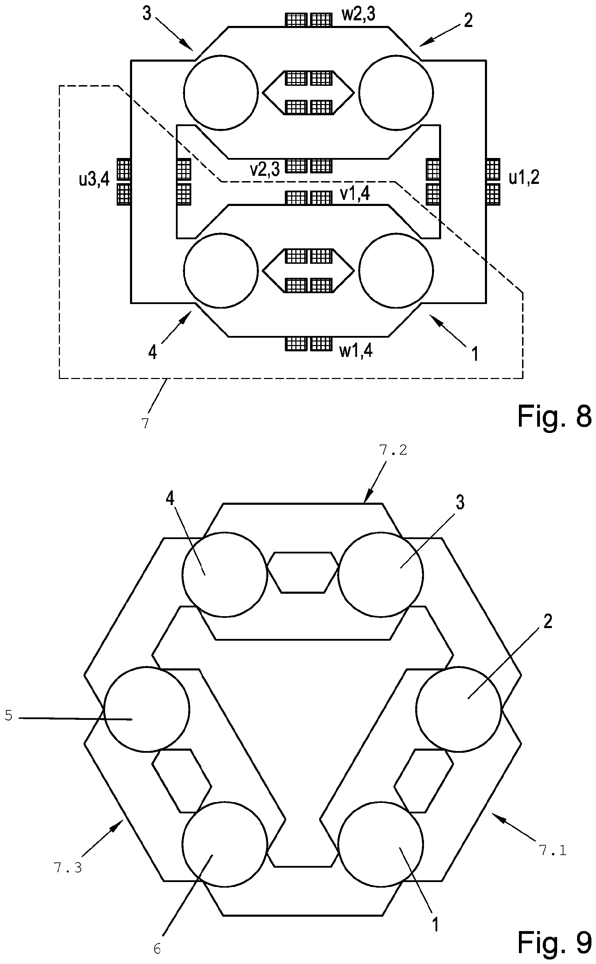

Eine beliebige Magnetisierung entlang der möglichen verkoppelten Drehungen der Teilmaschinen 1 bis 4 kann durch eine Linearkombination von Teilfeldern gemäß Fig. 6a und 6b erzeugt werden. Bringt man nun die Teilmotoren 1 bis 4 in entsprechenden Kontakt und lässt die magnetisch unnötigen Teile weg, so ergibt sich die vereinfachte Struktur gemäß Fig. 7. Es sind noch die ursprünglichen Spulen (Strang u mit Spulen u1 bis u4, Stränge v und w analog) symbolisch eingezeichnet. Durch Umordnung von Flussführungsteilen kann ohne Änderung der Luftspaltfelder der Teilmotoren 1 bis 4 beispielsweise die weiter vereinfachte Struktur gemäß Fig. 8 erhalten werden. Die Spulen wurden entlang der magnetischen Pfade ohne Flussverkettungsänderung verschoben, sodass jeweils zwei Spulen nebeneinander zu liegen kommen (z.B. u_{1, 2} oder w_{1, 2} bis w_{2, 3} etc. in Fig. 8). Die nebeneinander liegenden Teilspulen können nun jeweils zu einer einzelnen Spule zusammengefasst werden, wodurch sich die Zahl der Spulen von 12 auf 6 Spulen halbiert.

Die dreisträngige Anordnung gemäß Fig. 8 hat den Vorteil, dass übliche dreisträngige Umrichter zur Ansteuerung verwendet werden können. Die beiden jeweils zu einem Strang gehörigen Spulen, z.B. u1 bis u4 etc., können wahlweise in Serie oder parallel geschaltet werden, da sie ständig die gleichen Flussverkettungen tragen. Sie können aber auch mit getrennten Umrichtern (nicht dargestellt) angesteuert werden, um beispielsweise eine Redundanz oder eine erhöhte Leistung zu ermöglichen. Die Steuerung der Umrichter erfolgt vorteilhafterweise gemäß an sich bekannten Steuerverfahren für Drehstrommaschinen, etwa der feldorientierten Regelung, wobei sich hier, da an sich bekannt, eine genauere Beschreibung erübrigen kann. Dabei kann häufig auf Drehgeber verzichtet werden, wenn sog. "sensorlose" Verfahren, wie das an sich bekannte "INFORM®"-Verfahren oder EMK-Verfahren, eingesetzt werden. Für den Umrichter erscheint dann das "Multimotorsystem" im Klemmenverhalten wie eine einzige elektrische Maschine.

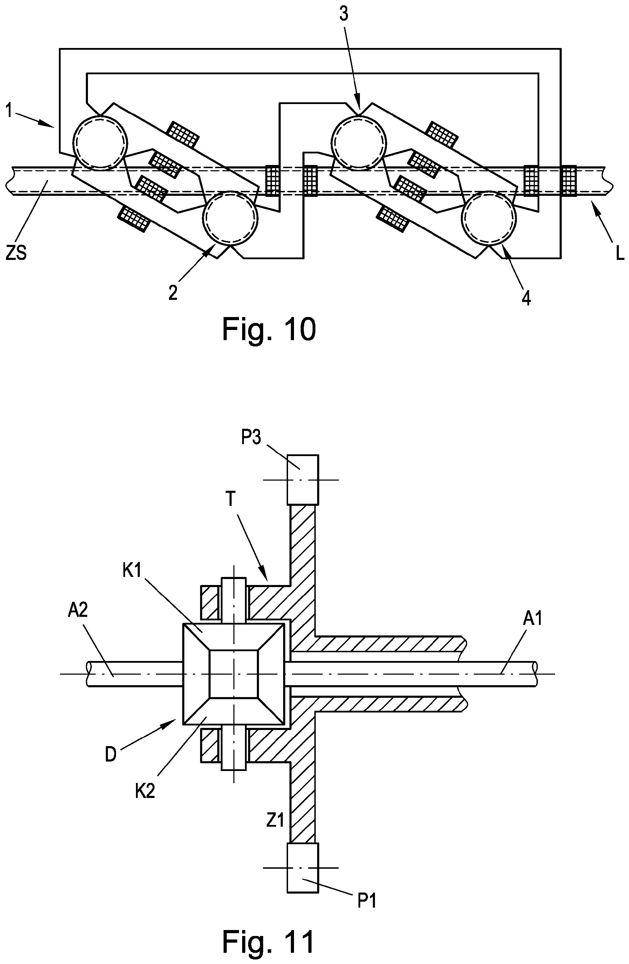

In Fig. 8 ist strichliert eine Teilstruktur 7 eingetragen, die ein Grundelement für weitere Anordnungen mit 2m Teilmotoren, m=1, 2, 3, 4... ist. Als Beispiel ist in Fig. 9 eine Anordnung mit m=3, d.h. drei Teilstrukturen 7.1, 7.2 und 7.3 und sechs Teilmotoren, z.B. 1 bis 6gezeigt (Spulen und Rotoren sind der Einfachheit halber nicht eingezeichnet). Damit kann beispielsweise ein Ringmotor mit zahlreichen Planeten oder auch ein beispielhafter Linearantrieb L (vgl. Fig. 10) realisiert werden. Im beispielhaften Linearantrieb L mit vier Teilmotoren 1, 2, 3, 4 gemäß Fig. 10 stellt eine beidseitig gezahnte Zahnstange ZS eine mechanische Kopplung der Teilmotoren 1 bis 4 dar.

Die mechanische Kopplung der beiden Strukturen (zweisträngig oder dreisträngig) kann in gleicher Weise mit formschlüssigen Verbindungen, vorzugsweise Zahnrädern, (alternativ Zahnriemen, Ketten etc.) erfolgen. Anzumerken ist, dass bei Rotoren, bei denen die Funktion unabhängig vom Rotorwinkel ist, wie etwa bei Asynchronmaschinen, auch eine reibschlüssige Verbindung zulässig ist.

In Fig. 4 ist ein Beispiel mit ausschließlich außenverzahnten Zahnrädern 12, 14 angegeben. Die zwei mit den Teilmaschinen 2 und 4 verbundenen Zahnräder 12 und 14 bewirken eine automatische Drehrichtungsumkehr von benachbarten Teilmaschinen. Jedes kleine Zahnrad 12, 14 (in Fig. 4 sind die Zahnräder als Doppelzahnräder ausgeführt) kann zu Realisierung eines Übersetzungsverhältnisses auf die Abtriebswelle A (in Fig. 4 im Zentrum der Anordnung sitzend) verwendet werden.

In Fig. 5 wird die Drehrichtungsumkehr benachbarter Teilmaschinen 1 bis 4 durch je ein Innen- und ein Außenzahnrad P2, P4 bzw. P1, P3 realisiert, wobei die eine Drehrichtungs-Gruppe ein zentrales Zahnrad Z1 mit Außenverzahnung und die andere Drehrichtungs-Gruppe ein zentrales Zahnrad Z2 mit Innenverzahnung aufweist, wobei die Übersetzungsverhältnisse der beiden Gruppen gleich sind. Realisiert man die beiden Teilgetriebe in der gleichen Ebene, so wird die Gruppe, die in das innenverzahnte zentrale Zahnrad Z2 eingreift, soweit nach außen verschoben, dass keine Kollision der Zahnräder auftritt.

Die Achsen der Teilmaschinen 1 bis 4 liegen dann gemäß der beispielhaften Anordnung in Fig. 3 bzw. Fig. 7 nicht mehr in den Ecken eines Quadrates, sondern vorzugsweise in den Ecken eines Rhombus Rh (s. Fig. 5), wobei die Achsen auf der kurzen Diagonale des Rhombus über die Planetenräder P1, P3 in das außenverzahnte innere Zahnrad Z1 eingreifen, und die Achsen auf der langen Diagonale auf das innenverzahnte äußere Zahnrad Z2 eingreifen.

In Fig. 5 ist im übrigen als Beispiel eine Übersetzung von r1:R1 = r2:R2 = 1:6 eingezeichnet. Prinzipiell ist auch eine umgekehrte Konstruktion möglich, d.h. die zwei Zahnreihen des zentralen Zahnradpaares sitzen innen und außen auf einem Kreisring ("eine zu einem Kreisring gebogene doppelseitige Zahnstange").

Lässt man den Radius des Kreisringes dann gegen unendlich gehen (gerade Zahnstange ZS), so ergibt sich ein beispielhafter Linearantrieb, s. auch Fig. 10.

Ordnet man die Zahnräder der zwei Drehrichtungsgruppen in verschiedenen Ebenen an (axial versetzt, ggf. auch auf der anderen Seite der Teilmaschinen möglich), so können die Achsen der Teilmaschinen 1 bis 4 weiterhin auf einem Quadrat (im Falle von vier Teilmaschinen 1 bis 4) bzw. allgemein auf einem gleichseitigen n-Eck angeordnet sein.

In einer besonderen Ausgestaltung ist der Relativwinkel zwischen den beiden Drehrichtungsgruppen durch eine geeignete Mechanik veränderbar. Beispielsweise können die fest verbundenen Zahnräder Z1 und Z2 von Fig. 5 eine (an sich bekannte) Schrägverzahnung aufweisen und durch eine Mechanik, die eine axiale Verschiebung der Zahnräder Z1 und Z2 gegenüber den eingreifenden Planetenrädern ermöglicht, axial bewegt werden. Durch die axiale Verschiebung kommt es zufolge der Schrägverzahnung zu einer Verdrehung des Relativwinkels zwischen den beiden Drehrichtungsgruppen. Damit werden die zwei Drehrichtungsgruppen zueinander verdreht, und es kann auf diese Weise etwa im Falle von permanentmagneterregten Rotoren eine geometrisch bedingte Feldschwächung ohne eine technisch übliche feldschwächende Statorstromkomponente realisiert werden. Damit kann beispielsweise ein Permanentmagnet-Synchronantrieb mit beliebiger Spannung während der Rotation, also auch einer Spannung Null, erzielt werden. Mit dieser axialen Bewegungsmöglichkeit können weiters auch andere Funktionen, wie z.B. eine Parkbremsfunktion, eine Sicherheitsfunktion "Klemmspannung Null" etc., zusätzlich realisiert werden.

In einer weiteren Ausgestaltung, Fig. 11, wird eines der Zahnräder Z1 oder Z2 bzw. das mechanisch fest verbundene Zahnradpaar Z1/Z2 als rotierender Trägerteil eines Differenzialgetriebes D verwendet, in dem vorzugsweise zwei Kegelräder K1, K2 des Differenzialgetriebes D gelagert sind, die nicht mit den Abtriebswellen A1, A2 verbunden sind. Eine der beiden Abtriebswellen, die Welle A1, des Differenzialgetriebe D wird durch die als Hohlwelle ausgeführte zentrale Welle des Planetenmotors geführt, die mit den Zahnrädern Z1 bzw. Z2 verbunden ist. Die zweite Abtriebswelle A2 verlässt die Antriebseinheit koaxial zur ersten Abtriebswelle A1 in der entgegengesetzten Richtung. Dadurch kann eine sehr kompakte, platzsparende und kostengünstige Antriebseinheit, z.B. für Elektrofahrzeuge, realisiert werden.

## Patentansprüche

1. Elektrisches Maschinensystem mit einer geradzahligen Anzahl von mechanisch und elektrisch verkoppelten Teilmaschinen (1-4), die gemeinsame magnetische Abschnitte und gemeinsame Spulen (SP1-SP4) aufweisen und über mechanische Getriebe verbunden sind, wobei jede Teilmaschine (1-4) einen Rotor aufweist, wobei benachbarte Teilmaschinen (1-4) zueinander entgegengesetzte Drehrichtungen bei betragsmäßig gleichen Drehzahlen aufweisen, **dadurch gekennzeichnet, dass** die Drehrichtungsumkehr benachbarter Teilmaschinen (1-4) durch ein Innen- und ein Außenzahnrad (P2, P4 bzw. P1, P3) je Maschinenpaar benachbarter Teilmaschinen mit entgegengesetzter Drehrichtung realisiert ist, wobei die Teilmaschinen (1-4) einer Drehrichtungsgruppe ausschließlich Innen- oder Außenzahnräder aufweisen, wobei eine Drehrichtungs-gruppe ein zentrales Zahnrad (Z1) mit Außenverzahnung, in welches die Außenzahnräder (P1, P3) eingreifen, und die andere Drehrichtungsgruppe ein zentrales Zahnrad (Z2) mit Innenverzahnung, in welches die Innenzahnräder (P2, P4) eingreifen, aufweist, wobei die Übersetzungsverhältnisse der beiden Gruppen gleich sind, und dass die Spulen (SP1-SP4) zu einem Drehstrom-Wicklungssystem beliebiger Strangzahl, vorzugsweise einem dreisträngigen Wicklungssystem, verschaltet sind.

2. Maschinensystem nach Anspruch 1, **dadurch gekennzeichnet, dass** die Rotoren der Teilmaschinen (1-4) synchron laufende Rotoren (RO1-RO4) mit Permanentmagneterregung, elektrischer Erregung und/oder Reluktanzcharakter sind.

3. Maschinensystem nach Anspruch 1, **dadurch gekennzeichnet, dass** die Rotoren der Teilmaschinen (1-4) asynchron laufende Rotoren in Form eines Kurzschlussläufers und/oder Schleifringläufers sind.

4. Maschinensystem nach einem der Ansprüche 1 bis 3, **dadurch gekennzeichnet, dass** das Spulensystem über leistungselektronische Stellglieder gemäß einem Ansteuerverfahren für Drehstrommaschinen angesteuert ist.

5. Maschinensystem nach einem der Ansprüche 1 bis 4, **dadurch gekennzeichnet, dass** Rechenmittel zur Ermittlung einer mittleren elektrischen Rotorposition der Teilmaschinen (1-4) über sensorlose Verfahren auf Basis mathematischer Modelle vorgesehen sind.

6. Maschinensystem nach einem der Ansprüche 1 bis 5, **dadurch gekennzeichnet, dass** die mittleren Winkellagen von mindestens zwei, vorzugsweise allen, in verschiedene Richtungen rotierenden Teilmaschinen (1-4) im Betrieb zueinander mechanisch veränderbar sind.

7. Maschinensystem nach einem der Ansprüche 1 bis 6, **dadurch gekennzeichnet, dass** eine Welle (A₁), die ein Getriebeelement bzw. Getriebeelemente trägt, welche(s) die Teilmaschinen mechanisch verkoppelt bzw. verkoppeln, mit einem Differenzialgetriebe mechanisch verbunden und vorzugsweise als Hohlwelle ausgeführt ist.

## Claims

1. Electrical machine system, having an even number of mechanically and electrically coupled sub-machines (1-4), which have common magnetic portions and common coils (SP1-SP4) and are connected via mechanical gear trains, each sub-machine (1-4) having a rotor, and adjacent sub-machines (1-4) rotating in opposite directions at the same rotational speeds, **characterised in that** the reverse rotation of adjacent sub-machines (1-4) is achieved by one internal and one external gear (P2, P4 and P1, P3) per machine pair of adjacent sub-machines rotating in opposite directions, the sub-machines (1-4) of a rotational direction group having exclusively internal or external gears, one rotational direction group having a central gear (Z1) that has an external toothing in which the external gears (P1, P3) engage, and the other rotational direction group having a central gear (Z2) that has an internal toothing in which the internal gears (P2, P4) engage, with the gear ratios of the two groups being the same, and **in that** the coils (SP1-SP4) are connected to form a three-phase winding system having any number of phase windings, preferably a three-phase-winding winding system.

2. Machine system according to claim 1, **characterised in that** the rotors of the sub-machines (1-4) are synchronous rotors (RO1-RO4) which have permanent-magnet excitation, electrical excitation and/or are of the reluctance type.

3. Machine system according to claim 1, **characterised in that** the rotors of the sub-machines (1-4) are asynchronous rotors in the form of a squirrel-cage rotor and/or a slip-ring rotor.

4. Machine system according to any of claims 1 to 3, **characterised in that** the coil system is controlled via power electronics actuators in accordance with a control method for three-phase machines.

5. Machine system according to any of claims 1 to 4, **characterised in that** computing means are provided for determining an average electrical rotor position of the sub-machines (1-4) using sensorless methods based on mathematical models.

6. Machine system according to any of claims 1 to 5, **characterised in that** the average angular positions of at least two, preferably all, sub-machines (1-4) rotating in different directions can be mechanically changed with respect to one another during operation.

7. Machine system according to any of claims 1 to 6, **characterised in that** a shaft (A₁) carrying a gear train element or gear train elements which mechanically couples or couple the sub-machines is mechanically connected to a differential and is preferably designed as a hollow shaft.

## Revendications

1. Système de machine électrique avec un nombre pair de machines partielles (1 - 4) couplées mécaniquement et électriquement, qui comportent des portions magnétiques communes et des bobines communes (SP1 - SP4) et qui sont reliées par l'intermédiaire d'engrenages mécaniques, dans lequel chaque machine partielle (1 - 4) comporte un rotor, dans lequel des machines partielles (1 - 4) adjacentes présentent des sens de rotation opposés avec des vitesses de rotation de valeurs absolues identiques, **caractérisé en ce que** l'inversion de sens de rotation de machines partielles (1 - 4) adjacentes est réalisée à l'aide d'une roue dentée interne et d'une roue dentée externe (P2, P4 respectivement P1, P3) pour chaque paire de machines partielles adjacentes avec sens de rotation opposés, dans lequel les machines partielles (1 - 4) d'un groupe de sens de rotation comprennent exclusivement des roues dentées internes ou externes, dans lequel un groupe de sens de rotation comprend une roue dentée centrale (Z1) avec une denture externe, dans laquelle s'engrènent les roues dentées externes (P1, P3) et l'autre groupe de sens de rotation comprend une roue dentée centrale (Z2) avec une denture interne, dans laquelle s'engrènent les roues dentées internes (P2, P4), dans lequel les rapports de démultiplication des deux groupes sont identiques et **en ce que** les bobines (SP1 - SP4) sont branchées en un système d'enroulement à courant triphasé à nombre de brins quelconque, de préférence un système d'enroulement à trois brins.

2. Système de machine selon la revendication 1, **caractérisé en ce que** les rotors des machines partielles (1 - 4) sont des rotors synchrones (RO1 - RO4) avec une excitation à aimants permanents, une excitation électrique et/ou une réluctance.

3. Système de machine selon la revendication 1, **caractérisé en ce que** les rotors des machines partielles (1 - 4) sont des rotors asynchrones sous la forme d'un rotor de court-circuit et/ou d'un rotor à bagues collectrices.

4. Système de machine selon l'une des revendications 1 à 3, **caractérisé en ce que** le système de bobines est contrôlé par l'intermédiaire d'organes de réglage électroniques de puissance selon un procédé de contrôle pour des machines à courant triphasé.

5. Système de machine selon l'une des revendications 1 à 4, **caractérisé en ce que** des moyens de calcul sont prévus pour la détermination d'une position de rotor électrique moyenne des machines partielles (1 - 4) par l'intermédiaire de procédés sans capteurs à base de modèles mathématiques.

6. Système de machine selon l'une des revendications 1 à 5, **caractérisé en ce que** les positions angulaires moyennes respectives d'au moins deux, de préférence toutes les machines partielles (1 - 4), tournant dans différentes directions peuvent être modifiées mécaniquement pendant le fonctionnement.

7. Système de machine selon l'une des revendications 1 à 6, **caractérisé en ce qu'**un arbre (A₁), qui supporte un élément d'engrenage ou des éléments d'engrenages, qui couple(nt) mécaniquement les machines partielles, est relié mécaniquement avec un engrenage différentiel et de préférence est conçu comme un arbre creux.
